(19) Europäisches Patentamt
European Patent Office
Office européen des brevets

(11) **EP 4 550 703 A1**

(12) **EUROPEAN PATENT APPLICATION**
published in accordance with Art. 153(4) EPC

(43) Date of publication:
07.05.2025 Bulletin 2025/19

(51) International Patent Classification (IPC):
**H04L 1/18** (2023.01)

(21) Application number: 23830528.8

(22) Date of filing: 30.06.2023

(52) Cooperative Patent Classification (CPC):
**H04L 1/00; H04L 1/18; H04L 1/1812; H04L 5/00; H04W 72/12**

(86) International application number:
**PCT/CN2023/105214**

(87) International publication number:
**WO 2024/002366 (04.01.2024 Gazette 2024/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.06.2022 CN 202210761179**

(71) Applicant: **Beijing Unisoc Communications Technology Co., Ltd**
**Beijing 100083 (CN)**

(72) Inventor: **ZHOU, Huan**
**Beijing 100083 (CN)**

(74) Representative: **Mewburn Ellis LLP**
**Aurora Building**
**Counterslip**
**Bristol BS1 6BX (GB)**

(54) **COMMUNICATION METHOD AND COMMUNICATION APPARATUS**

(57) A communication method and a communication apparatus are provided. The communication method includes the following. *N* downlink control information (DCIs) are monitored, where the *N* DCIs each support scheduling of physical downlink shared channel (PDSCH) transmissions on at least two cells, and *N* is a positive integer and $N \geq 1$. A hybrid automatic repeat request-acknowledgement (HARQ-ACK) codebook is sent, where the HARQ-ACK codebook is used for feeding back HARQ-ACK information of a PDSCH on at least one cell scheduled by each of the *N* DCIs. By means of the disclosure, it is possible to realize HARQ-ACK feedback with regard to a PDSCH actually scheduled by DCI supporting multi-cell scheduling.

NETWORK DEVICE

TERMINAL DEVICE

301, NETWORK DEVICE SENDS M DCIs

302, TERMINAL DEVICE SENDS HARQ-ACK CODEBOOK IF N DCIs ARE MONITORED BY TERMINAL DEVICE AND THE N DCIs EACH SUPPORT SCHEDULING OF PDSCH TRANSMISSIONS ON AT LEAST TWO CELLS

FIG. 3

**Description**

TECHNICAL FIELD

The disclosure relates to the field of communication technology, and more particularly, to a communication method and a communication apparatus.

BACKGROUND

In a wireless communication system, a terminal device feeds back hybrid automatic repeat request-acknowledgement (HARQ-ACK) information to a network device, so as to notify the network device whether a physical downlink shared channel (PDSCH) received by the terminal device is correct. For example, if the PDSCH received by the terminal device is correct, the terminal device feeds back ACK information to the network device. For another example, if the PDSCH received by the terminal device is incorrect, the terminal device feeds back negative acknowledgement (NACK) information to the network device. However, currently, the terminal device performs HARQ-ACK information feedback for the case where one downlink control information (DCI) supports scheduling of PDSCH transmission on a single cell.
However, in a new radio (NR) system, one DCI can support multi-cell scheduling, that is, one DCI can support scheduling of PDSCH transmissions on at least two cells. Therefore, how to perform HARQ-ACK information feedback with regard to a PDSCH actually scheduled by DCI supporting multi-cell scheduling becomes a problem to be solved.

SUMMARY

A communication method and a communication apparatus are provided, which can provide a mechanism for performing HARQ-ACK feedback for a physical downlink shared channel (PDSCH) actually scheduled by downlink control information (DCI) supporting multi-cell scheduling.
In a first aspect, a communication method is provided in embodiments of the disclosure. The method includes the following. N DCIs are monitored, where the N DCIs each support scheduling of PDSCH transmissions on at least two cells, and $N$ is a positive integer and $N \geq 1$. A hybrid automatic repeat request-acknowledgement (HARQ-ACK) codebook is sent, where the HARQ-ACK codebook is used for feeding back HARQ-ACK information of a PDSCH on at least one cell scheduled by each of the $N$ DCIs.
Based on the illustration in the first aspect, if $N$ multi-cell scheduling DCIs are monitored, i. e. the $N$ DCIs each support scheduling of PDSCH transmissions on at least two cells, send a HARQ codebook for feeding back HARQ-ACK information of a PDSCH on at least one cell actually scheduled by each of *the* $N$ DCIs, thereby designing a mechanism for HARQ-ACK feedback with regard to a PDSCH actually scheduled by DCI supporting multi-cell scheduling.
In an optional implementation, the $N$ DCIs are monitored in a first monitoring occasion.
In this manner, a network device can send multiple DCIs in the same occasion, such as different DCIs for different cells, which is conducive to flexibility of scheduling and efficiency in utilization of frequency domain resources.
In an optional implementation, the HARQ-ACK codebook sequentially indicates the HARQ-ACK information of the PDSCH on the at least one cell scheduled by each of the $N$ DCIs in an ascending order of counter-downlink assignment indexes (C-DAIs). Alternatively, the HARQ-ACK codebook sequentially indicates the HARQ-ACK information of the PDSCH on the at least one cell scheduled by each of the $N$ DCIs in a descending order of C-DAIs.
In this manner, by sequentially feeding back the HARQ-ACK information, it is possible to facilitate the network device to determine whether a PDSCH corresponding to each cell is transmitted and decoded correctly.
In an optional implementation, the $N$ DCIs include a first DCI and a second DCI, where the first DCI includes a first C-DAI, and the first DCI is used for scheduling PDSCH transmission on at least one cell; the second DCI includes a second C-DAI, and the second DCI is used for scheduling PDSCH transmission on at least one cell. If a cell index of a first cell is smaller than a cell index of a second cell, the first C-DAI is smaller than the second C-DAI, where the first cell is used for transmission of the first DCI, and the second cell is used for transmission of the second DCI.
In this manner, a sorting order of C-DAIs in the $N$ DCIs can be determined according to cell indexes of cells used for transmitting the DCIs, so that the network device can determine whether a PDSCH corresponding to each cell is transmitted and decoded correctly.
In an optional implementation, the $N$ DCIs include a first DCI and a second DCI, where the first DCI includes a first C-DAI, and the first DCI is used for scheduling PDSCH transmission on a first cell and PDSCH transmission on a third cell; and the second DCI includes a second C-DAI, and the second DCI is used for scheduling PDSCH transmission on a second cell and PDSCH transmission on a fourth cell. If a cell index of a first reference cell is smaller than a cell index of a second reference cell, the first C-DAI is smaller than the second C-DAI, where the first reference cell is one of the first cell or the third cell, and the second reference cell is one of the second cell or the fourth cell.
In this manner, a sorting order of C-DAIs in the $N$ DCIs can be determined according to a cell index of a reference cell determined from cells scheduled by each DCI, which facilitates determining a sorting order of HARQ-ACK information of a PDSCH scheduled by each DCI in the HARQ-ACK codebook.

In an optional implementation, the first reference cell is a cell with a smaller cell index in the first cell and the third cell, and the second reference cell is a cell with a smaller cell index in the second cell and the fourth cell. Alternatively, the first reference cell is a cell with a larger cell index in the first cell and the third cell, and the second reference cell is a cell with a larger cell index in the second cell and the fourth cell.

In this manner, it is conducive to determining a location and a sorting order of HARQ-ACK information of a PDSCH scheduled by each DCI in the HARQ-ACK codebook.

In an optional implementation, the HARQ-ACK codebook sequentially indicates HARQ-ACK information of a PDSCH on at least one cell scheduled by one of the $N$ DCIs according to an order in which the cells are scheduled by the DCI. Alternatively, the HARQ-ACK codebook sequentially indicates the HARQ-ACK information of the PDSCH on the at least one cell scheduled by one of the $N$ DCIs in an ascending order of cell indexes of the cells scheduled by the DCI.

In this manner, it is possible to determine a location and a sorting order of the HARQ-ACK information of the PDSCH on the at least one cell scheduled by one of the $N$ DCIs in the HARQ-ACK codebook.

In an optional implementation, the number of bits used for the HARQ-ACK codebook to indicate the HARQ-ACK information of the PDSCH on the at least one cell scheduled by one of the $N$ DCIs is $N_{\text{HARQ-ACK}}^{\max}$, where $N_{\text{HARQ-ACK}}^{\max} = N_{\text{TB}}^{\text{DL}} * N_{\text{PDSCH}}^{\max}$, $N_{\text{TB}}^{\text{DL}}$ is the maximum number of codewords supported by one PDSCH, and $N_{\text{PDSCH}}^{\max}$ is the maximum number of PDSCHs supported by one DCI.

In this manner, it is possible to determine the number of bits occupied by the HARQ-ACK information of the PDSCH on the at least one cell scheduled by one of the $N$ DCIs.

In an optional implementation, "$N_{\text{TB}}^{\text{DL}}$ is the maximum number of codewords supported by one PDSCH" means that: $N_{\text{TB}}^{\text{DL}}$ is the maximum number of codewords supported by one PDSCH across one cell supporting multi-cell scheduling within one physical uplink control channel (PUCCH) group; or $N_{\text{TB}}^{\text{DL}}$ is the maximum number of codewords supported by one PDSCH scheduled by a multi-carrier scheduling DCI format.

In an optional implementation, "$N_{\text{PDSCH}}^{\max}$ is the maximum number of PDSCHs supported by one DCI" means that: $N_{\text{PDSCH}}^{\max}$ is the maximum number of PDSCHs that can be scheduled by one DCI across one cell supporting multi-cell scheduling within one PUCCH group; or $N_{\text{PDSCH}}^{\max}$ is the maximum number of PDSCHs that can be scheduled by a multi-carrier scheduling DCI format.

In a second aspect, a communication method is provided in embodiments of the disclosure. The method includes the following. $M$ DCIs are sent, where the $M$ DCIs include at least one DCI, and the at least one DCI each supports scheduling of PDSCH transmissions on at least two cells, and $M$ is a positive integer and $M \geq 1$. A HARQ-ACK codebook sent by a terminal device is received, where the HARQ-ACK codebook is used for feeding back HARQ-ACK information of a PDSCH on at least one cell scheduled by each of the $N$ DCIs in the at least one DCI.

In an optional implementation, the HARQ-ACK codebook sequentially indicates the HARQ-ACK information of the PDSCH on the at least one cell scheduled by each of the $N$ DCIs in an ascending order of C-DAIs. Alternatively, the HARQ-ACK codebook sequentially indicates the HARQ-ACK information of the PDSCH on the at least one cell scheduled by each of the $N$ DCIs in a descending order of C-DAIs.

In an optional implementation, the at least one DCI includes a first DCI and a second DCI, where the first DCI includes a first C-DAI, and the first DCI is used for scheduling PDSCH transmission on at least one cell; and the second DCI includes a second C-DAI, and the second DCI is used for scheduling PDSCH transmission on at least one cell. If a cell index of a first cell is smaller than a cell index of a second cell, the first C-DAI is smaller than the second C-DAI, where the first cell is used for transmission of the first DCI, and the second cell is used for transmission of the second DCI.

In an optional implementation, the at least one DCI includes a first DCI and a second DCI, where the first DCI includes a first C-DAI, and the first DCI is used for scheduling PDSCH transmission on a first cell and PDSCH transmission on a third cell; and the second DCI includes a second C-DAI, and the second DCI is used for scheduling PDSCH transmission on a second cell and PDSCH transmission on a fourth cell. If a cell index of a first reference cell is smaller than a cell index of a second reference cell, the first C-DAI is smaller than the second C-DAI, where the first reference cell is one of the first cell or the third cell, and the second reference cell is one of the second cell or the fourth cell.

In an optional implementation, the first reference cell is a cell with a smaller cell index in the first cell and the third cell, and the second reference cell is a cell with a smaller cell index in the second cell and the fourth cell. Alternatively, the first reference cell is a cell with a larger cell index in the first cell and the third cell, and the second reference cell is a cell with a larger cell index in the second cell and the fourth cell.

In an optional implementation, the HARQ-ACK codebook sequentially indicates HARQ-ACK information of a PDSCH on at least one cell scheduled by one of the N DCIs according to an order in which the cells are scheduled by the DCI. Alternatively, the HARQ-ACK codebook sequentially indicates the HARQ-ACK information of the PDSCH on the at least one cell scheduled by one of the $N$ DCIs in an ascending order of cell indexes of the cells scheduled by the DCI.

In an optional implementation, the number of bits used for the HARQ-ACK codebook to indicate the HARQ-ACK information of the PDSCH on the at least one cell scheduled by one of the $N$ DCIs is $N_{\mathrm{HARQ-ACK}}^{\max}$, wherein $N_{\mathrm{HARQ-ACK}}^{\max} = N_{\mathrm{TB}}^{\mathrm{DL}} * N_{\mathrm{PDSCH}}^{\max}$, $N_{\mathrm{TB}}^{\mathrm{DL}}$ is the maximum number of codewords supported by one PDSCH, and $N_{\mathrm{PDSCH}}^{\max}$ is the maximum number of PDSCHs supported by one DCI.

In an optional implementation, " $N_{\mathrm{TB}}^{\mathrm{DL}}$ is the maximum number of codewords supported by one PDSCH" means that: $N_{\mathrm{TB}}^{\mathrm{DL}}$ is the maximum number of codewords supported by one PDSCH across one cell supporting multi-cell scheduling within one PUCCH group; or $N_{\mathrm{TB}}^{\mathrm{DL}}$ is the maximum number of codewords supported by one PDSCH scheduled by a multi-carrier scheduling DCI format.

In an optional implementation, " $N_{\mathrm{PDSCH}}^{\max}$ is the maximum number of PDSCHs supported by one DCI" means that: $N_{\mathrm{PDSCH}}^{\max}$ is the maximum number of PDSCHs that can be scheduled by one DCI across one cell supporting multi-cell scheduling within one PUCCH group; or $N_{\mathrm{PDSCH}}^{\max}$ is the maximum number of PDSCHs that can be scheduled by a multi-carrier scheduling DCI format.

In a third aspect, a communication apparatus is provided in embodiments of the disclosure. The communication apparatus includes units for implementing the method in any possible implementation of the first aspect and the second aspect.

In a fourth aspect, a communication apparatus is provided in embodiments of the disclosure. The communication apparatus includes a processor and a memory. The processor and the memory are connected to each other. The memory is is configured to store computer programs, and the computer programs include program instructions. The processor is configured to invoke the program instructions to perform the method according to the first aspect or any optional implementation of the first aspect, or the method according to the second aspect or any optional implementation of the second aspect.

In a fifth aspect, a chip is provided in embodiments of the disclosure. The chip includes a processor and an interface, where the processor is coupled to the interface. The interface is configured to receive or output a signal, and the processor is configured to execute code instructions, so as to perform the method according to the first aspect or any optional implementation of the first aspect, or the method according to the second aspect or any optional implementation of the second aspect.

In a sixth aspect, a module device is provided in embodiments of the disclosure. The module device includes a communication module, a power-supply module, a storage module, and a chip module. The power-supply module is configured to supply power to the module device. The storage module is configured to store data and/or instructions. The communication module is configured to communicate with an external device. The chip module is configured to invoke the data and/or the instructions stored in the storage module, to perform, in cooperation with the communication module, the method according to the first aspect or any optional implementation of the first aspect, or the method according to the second aspect or any optional implementation of the second aspect.

In a seventh aspect, a computer-readable storage medium is provided in embodiments of the disclosure. The computer-readable storage medium is configured to store computer programs. The computer programs include program instructions which, when executed by an electronic device, are operable to perform the method according to the first aspect or any optional implementation of the first aspect, or the method according to the second aspect or any optional implementation of the second aspect.

BRIEF DESCRIPTION OF THE DRAWINGS

FIG. 1 is a schematic timing diagram illustrating downlink data scheduling provided in embodiments of the disclosure.

FIG. 2 is a schematic structural diagram of a communication system provided in embodiments of the disclosure.

FIG. 3 is a schematic flowchart of a communication method provided in embodiments of the disclosure.

FIG. 4a is a schematic diagram illustrating cells scheduled by downlink control information (DCI) provided in embodiments of the disclosure.

FIG. 4b is a schematic diagram illustrating cells scheduled by DCI provided in embodiments of the disclosure.

FIG. 5 is a schematic structural diagram of a communication apparatus provided in embodiments of the disclosure.

FIG. 6 is a schematic structural diagram of another communication apparatus provided in embodiments of the disclosure.

FIG. 7 is a schematic structural diagram of another communication apparatus provided in embodiments of the disclosure.

FIG. 8 is a schematic structural diagram of a module device provided in embodiments of the disclosure.

DETAILED DESCRIPTION

In embodiments of the disclosure, unless otherwise specified, the character "/" indicates that the associated objects are in an "or" relationship. For example, $A/B$ can mean $A$ or $B$. The term "and/or" describes an association between associated objects, which means that there can be three relationships. For example, $A$ and/or $B$ can mean $A$ alone, both $A$ and $B$ exist, and $B$ alone.

It should be noted that, terms such as "first" and "second" in embodiments of the disclosure are only used for distinguishing and illustrative purposes, and shall not be understood as indicating or implying relative importance or implicitly indicating the number of technical features indicated, and also shall not be understood as indicating or implying an order.

In embodiments of the disclosure, "at least one" refers to one or more, and "multiple" refers to two or more. In addition, "at least one (one)" or a similar expression thereof refers to any combination of these items, and can include any combination of one or more items. For example, at least one (one) of $A, B$ ,or $C$ can mean: $A; B; C; A$ and $B; A$ and $C; B$ and $C;$ or $A, B,$ and $C. A, B,$ and $C$ each can be an element, or can be a set containing one or more elements.

In the embodiments of the disclosure, "exemplary", "in some embodiments", "in another embodiment", and the like are used for exemplification, illustration, or elaboration. Any embodiment or design described as "exemplary" in the disclosure shall not be construed as preferred or advantageous over other embodiments or designs. Instead, use of the term "exemplary" is intended to present concepts in a concrete manner.

The terms "of", "relevant", and "corresponding" in embodiments of the disclosure may sometimes be used interchangeably, and it should be noted that, when the difference therebetween is not emphasized, the meanings thereof are the same. In embodiments of the disclosure, "communication" and "transmission" may sometimes be used interchangeably, and it should be noted that, when the difference therebetween is not emphasized, the meanings thereof are the same. For example, transmission may include sending and/or receiving, and may be a noun or a verb.

The term "equal to" in embodiments of the disclosure can be used in conjunction with "greater than" and applicable to the technical solution used in the case of "greater than", or can be used in conjunction with "less than" and applicable to the technical solution used in the case of "less than". It should be noted that, when "equal to" is used in conjunction with "greater than", "equal to" cannot be used in conjunction with "less than"; and when "equal to" is used in conjunction with "less than", "equal to" cannot be used in conjunction with "greater than".

Some terms involved in embodiments of the disclosure will be explained below to facilitate understanding by those skilled in the art.

1. Terminal device: The terminal device in embodiments of the disclosure is a device having wireless transceiver functions, and may be referred to as a terminal, a user equipment (UE), a mobile station (MS), a mobile terminal (MT), an access terminal device, an in-vehicle terminal device, a terminal device in industrial control, a UE unit, a UE station, a mobile station, a remote station, a remote terminal device, a mobile device, a UE terminal device, a wireless communication device, a UE agent, a UE apparatus, or the like. The terminal device may be stationary or mobile. It should be noted that, the terminal device may support at least one wireless communication technology, for example, long term evolution (LTE), new radio (NR), and the like. For example, the terminal device may be a mobile phone, a tablet computer (pad), a desktop computer, a notebook computer, an all-in-one computer, an in-vehicle terminal, a virtual reality (VR) terminal device, an augmented reality (AR) terminal device, a wireless terminal in industrial control, a wireless terminal in self driving, a wireless terminal in remote medical surgery, a wireless terminal in smart grid, a wireless terminal in transportation safety, a wireless terminal in smart city, a wireless terminal in smart home, a cellular phone, a cordless phone, a session initiation protocol (SIP) telephone, a wireless local loop (WLL) station, a personal digital assistant (PDA), various devices having wireless communication functions such as a handheld device, a computing device, or other processing devices connected to a wireless modem, a wearable device, a terminal device in a future mobile communication network, or a terminal device in a future evolved public land mobile network (PLMN). In some embodiments of the disclosure, the terminal device may also be an apparatus with transceiver functions, for example, a system-on-chip (SOC). The SOC may include a chip, and may further include other discrete components.

2. Network device: The network device in embodiments of the disclosure is a device for providing wireless communication functions for the terminal device, and may also be referred to as an access network device, a radio access network (RAN) device, or the like. The network device may support at least one wireless communication technology, such as LTE and NR. Exemplarily, the network device includes, but is not limited to, a next-generation node B (gNB), an evolved node B (eNB), and a radio network controller (RNC), a node B (NB), a base station controller (BSC), a base transceiver station (BTS), a home base station (for example, a home evolved node B, or home node B (HNB)), a baseband unit (BBU), a transmitting and receiving point (TRP), a transmitting point (TP), a mobile switching center, etc. in a 5th-generation (5G) mobile communication system. The network device may also be a radio controller, a centralized unit (CU), and/or a distributed unit (DU) in a cloud radio access network (CRAN) scenario, or the network device may be a relay station, an access point, an in-vehicle device, a terminal device, a wearable device, and a network device in future mobile communications or a network device in a future evolved PLMN, etc. In some embodiments, the network device may also be a device that provides wireless communication functions for the terminal device, such as an SOC. For example, the SOC may include a chip and may further include other discrete components.

3. Hybrid automatic repeat request (HARQ)

HARQ is a technology combining forward error correction (FEC) and automatic repeat request (ARQ) methods. In FEC, redundant information is added such that a receiving end can correct some errors, thereby reducing the number of retransmissions. For an error that cannot be corrected by means of FEC, the receiving end requests, through an ARQ mechanism, a transmitting end to retransmit data. The receiving end detects whether a data packet received has an error by using an error detection code, where the error detection code is usually cyclic redundancy check (CRC). If there is no error, the receiving end sends an acknowledgement (ACK) message to the transmitting end, and the transmitting end transmits a next data packet after the ACK message is received. If there is an error, the receiving end discards the data packet and sends a negative acknowledgement (NACK) message to the transmitting end, and the transmitting end retransmits the same data after the NACK message is received. In the disclosure, for ease of illustration, the ACK information and the NACK information are collectively referred to as HARQ-ACK information.

4. Physical downlink control channel (PDCCH), physical downlink shared channel (PDSCH), and HARQ-ACK feedback

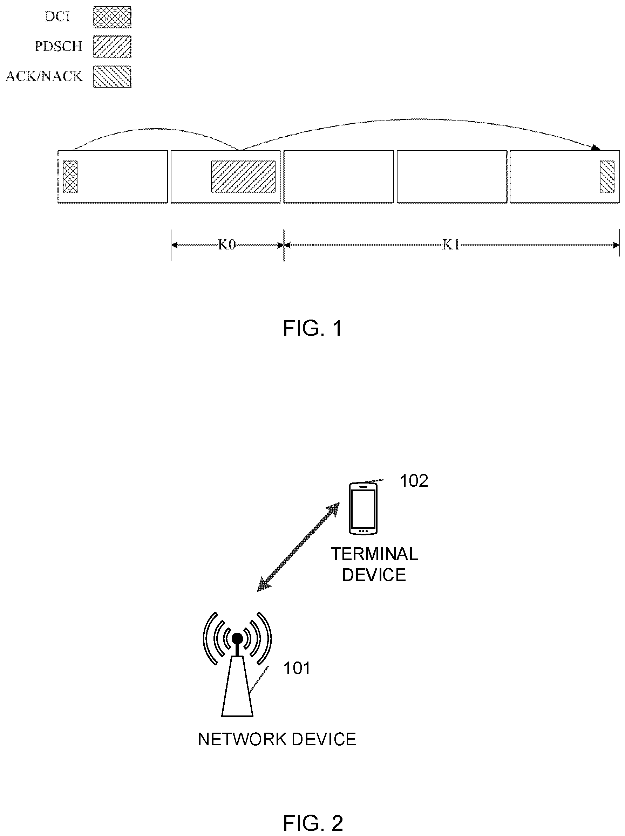

A timing diagram of downlink data scheduling is illustrated in FIG. 1. For example, in 5th-generation new radio (5G NR), $K0$ and $K1$ are both in a unit of slots. $K0$ represents a time interval between a PDSCH and a PDCCH, where the PDSCH is used for transmitting downlink data, and the PDCCH is used for transmitting downlink control information (DCI), and the DCI is used for scheduling downlink data carried on the PDSCH. $K1$ represents a time interval between a HARQ-ACK feedback and the PDSCH, where the HARQ-ACK feedback is used for performing feedback with regard to reception of downlink data carried on the PDSCH.

5. Counter-downlink assignment index (counter DAI, C-DAI) and total DAI (T-DAI)

A DAI field is configured in DCI, and the DAI field includes a C-DAI and a T-DAI. With regard to a certain physical uplink control channel (PUCCH), a T-DAI for a certain DAI counting occasion is the total number of DCIs transmitted by a base station across all cells within a PUCCH group from the 1st DAI counting occasion to the DAI counting occasion in a PDCCH monitoring occasion set. The DAI counting occasion can be understood as an occasion in which the DCI is monitored in a PDCCH monitoring occasion set. The PUCCH group is a cell group consisting of several cells, and PUCCH transmission can be performed on only one cell in the cell group, where such cell can be referred to as a PUCCH cell, while PUCCH transmission cannot be performed on other cells in the cell group. That is, HARQ-ACK information corresponding to other cells is multiplexed and transmitted on the PUCCH on the PUCCH cell.

The T-DAI is illustrated below by taking Table 1 as an example. For DAI counting occasion 2, the T-DAI is counted from DAI counting occasion 1 to DAI counting occasion 2, and the total number of DCIs sent by the base station on cell 1 to cell 6, namely the T-DAI, is 10.

The following describes a C-DAI for a certain cell in a certain DAI counting occasion. The C-DAI for the cell in the DAI counting occasion is the sum of a T-DAI corresponding to a previous DAI counting occasion and the accumulative number times that DCI is sent by the base station on the $1^{st}$ cell to the cell in the DAI counting occasion in a PDCCH monitoring occasion set.

The C-DAI is illustrated below by taking Table 1 as an example. For cell 3 in DAI counting occasion 2, the base station has sent DCI twice on cell 1 to cell 3 in DAI counting occasion 2, and the T-DAI corresponding to the previous DAI counting occasion (i. e. DAI counting occasion 1) is 6, and accordingly, a C-DAI corresponding to cell 3 in DAI counting occasion 2 is 8.

It can be understood that, in the example illustrated in Table 1, for the same DAI counting occasion, a C-DAI is counted in an ascending order of cell indexes of cells, and understandably, the counting order in Table 1 is only an example.

It should be noted that, the monitoring occasion in the disclosure can be replaced by the DAI counting occasion, which can be understood as a monitoring occasion in which a PDCCH is monitored in a PDCCH monitoring occasion set.

Table 1

| C-DAI/T-DAI | | | |
|---|---|---|---|
| Cell index | DAI monitoring occasion 1 | DAI monitoring occasion 2 | DAI monitoring occasion 3 |
| 1 | 1/6 | | |
| 2 | 2/6 | 7/10 | |
| 3 | 3/6 | 8/10 | |
| 4 | 4/6 | | 11/11 |
| 5 | 5/6 | 9/10 | |
| 6 | 6/6 | 10/10 | |

Referring to FIG. 2, FIG. 2 is a schematic structural diagram of a communication system provided in embodiments of the disclosure. The communication system can include, but is not limited to, one or more network devices and one or more terminal devices. In FIG. 2, one network device 101 and one terminal device 102 are taken as an example, where a base station is taken as an example of the network device 101 in FIG. 2, and a mobile phone is taken as an example of the terminal device 102 in FIG. 2. The terminal device 102 can establish a wireless link with the network device 101 in order for communication. The communication system illustrated in FIG. 2 includes, but is not limited to, a network device and a terminal device, and can further include other communication devices. The quantity and forms of the devices illustrated in FIG. 2 are intended for illustrative purpose, and do not constitute limitation on embodiments of the disclosure.

In the communication system illustrated in FIG. 2, the network device 101 can send at least one DCI, where each of the at least one DCI supports scheduling of PDSCH transmissions on at least two cells. The terminal device 102 performs HARQ-ACK feedback according to a PDSCH on at least one cell actually scheduled by each of the at least one DCI.

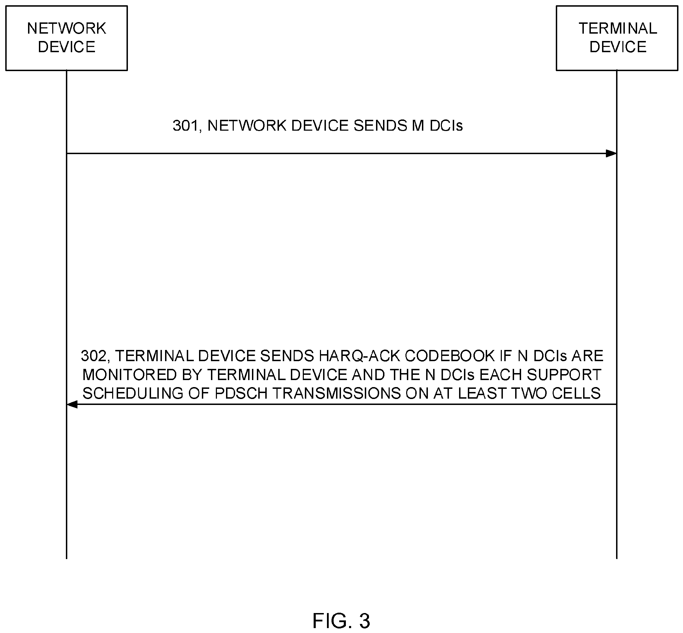

FIG. 3 is a schematic flowchart illustrating an embodiment of a communication method provided in the disclosure. As illustrated in FIG. 3, the method can include, but is not limited to, the following steps.

301, a network device sends $M$ DCIs, where the $M$ DCIs include at least one DCI, and the at least one DCI each supports scheduling of PDSCH transmissions on at least two cells. Accordingly, a terminal device monitors DCI. $M$ is a positive integer and $M \geq 1$.

302, if $N$ DCIs are monitored by the terminal device and the $N$ DCIs each support scheduling of PDSCH transmissions on at least two cells, then the terminal device sends a HARQ-ACK codebook, where $N$ is a positive integer and $N \geq 1$. Accordingly, the network device receives the HARQ-ACK codebook.

The HARQ-ACK codebook is used for feeding back HARQ-ACK information of a PDSCH on at least one cell scheduled by each of the $N$ DCIs in the at least one DCI. In other words, the HARQ-ACK codebook indicates the HARQ-ACK information of the PDSCH on the at least one cell scheduled by each of the $N$ DCIs in the at least one DCI.

It should be understood that, in embodiments of the disclosure, "$N$ DCIs are monitored by the terminal device" can mean that $N$ DCIs are received by the terminal device.

It should be noted that, during implementation, the $M$ DCIs sent by the network device include at least one DCI supporting scheduling of PDSCH transmissions on at least two cells, that is, the $M$ DCIs include at least one DCI supporting multi-cell scheduling. It can be understood that, the DCI supporting multi-cell scheduling can also be referred to as multi-cell scheduling DCI (which can also be referred to as multi-carrier scheduling DCI). During scheduling, the multi-cell scheduling DCI can schedule PDSCH transmission on one cell or multiple cells. Whether the DCI is a multi-cell scheduling DCI (also referred to as multi-carrier scheduling DCI) or a single-cell scheduling DCI (also referred to as single-carrier scheduling DCI) can be distinguished by a DCI format, where the single-cell scheduling DCI is a DCI which only supports scheduling of PDSCH transmission on one cell.

Exemplarily, the $M$ DCIs sent by the network device can all be multi-cell scheduling DCIs, that is, the number of DCIs in the at least one DCI supporting multi-cell scheduling is the same as the value of $M$. Alternatively, the $M$ DCIs sent by the network device can include multi-cell scheduling DCI and single-cell scheduling DCI, that is, the number of DCIs in the at least one DCI supporting multi-cell scheduling is less than the value of $M$, which is not limited in the disclosure.

In some embodiments, the number of multi-cell scheduling DCIs sent by the network device can be the same as or different from the number of multi-cell scheduling DCIs monitored by the terminal device. In embodiments of the disclosure, as an example, $N$ multi-cell scheduling DCIs in the at least one multi-cell scheduling DCI are monitored by the terminal device.

In an embodiment, the $N$ DCIs in embodiments of the disclosure each support scheduling of PDSCH transmissions on at least two cells, that is, each of the $N$ DCIs supports multi-cell scheduling.

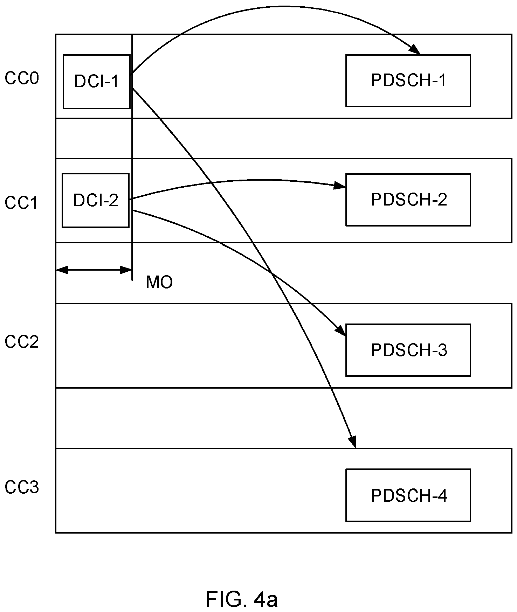

In the following, PDSCH transmissions on two cells scheduled by a single DCI in the disclosure will be exemplified with reference to FIG. 4a. As illustrated in FIG. 4a, DCI-1 transmitted on cell CC0 is used for scheduling transmission of PDSCH-1 on cell CC0 and transmission of PDSCH 4 on cell CC3, and DCI-2 transmitted on cell CC1 is used for scheduling transmission of PDSCH-3 on cell CC1 and transmission of PDSCH-2 on cell CC2. It can be understood that, the number of cells scheduled by each DCI can be different. FIG. 4a is only an example, and does not constitute limitation on the disclosure.

Exemplarily, the terminal device can monitor in each monitoring occasion in a PDCCH monitoring occasion set, and one or more DCIs can be monitored by the terminal device in the same monitoring occasion. As an example, the $N$ DCIs can also be monitored by the terminal device in a certain monitoring occasion (such as a first monitoring occasion). The monitoring occasion in which the DCI is monitored can also be referred to as a DAI counting occasion. It can be understood that, no DCI may be monitored by the terminal device in a certain monitoring occasion.

In an embodiment, each of the $N$ DCIs includes a C-DAI and a T-DAI. For the manner in which the T-DAI is counted, reference can be made to the illustration in the foregoing embodiments, which will not be repeated herein. The manner in which the C-DAI in each DCI is counted will be exemplified below.

In a possible design, in the $N$ DCIs, a counting order of a C-DAI in each of at least two DCIs monitored in the same monitoring occasion (which can also be referred to as DAI counting occasion) can be determined according to a cell index of a cell for transmitting the DCI. It can be understood that, the counting order of the C-DAI in each of the at least two DCIs monitored in the same monitoring occasion can be determined by the network device according to the cell index of the cell for transmitting the DCI. In a possible implementation, the number of DCIs sent by the network device can be the same as or different from the number of DCIs monitored by the terminal device. Therefore, C-DAIs in the DCIs sent by the network device are consecutive, but C-DAIs in the DCIs monitored by the terminal device can be consecutive or non-consecutive. As an example, the network device sends three DCIs, where C-DAIs in the three DCIs can be 1, 2, and 3 respectively. Two of the three DCIs may be monitored by terminal device, where C-DAIs in the two DCIs can be 1 and 3 respectively, i. e. two DCIs whose C-DAIs are non-consecutive are monitored by the terminal device. It can be understood that, the C-DAIs in the DCIs monitored by the terminal device can also be consecutive, which is not limited in the disclosure.

Exemplarily, in the at least two DCIs monitored in the same monitoring occasion (which can also be referred to as DAI counting occasion), a larger cell index of a cell for transmitting DCI corresponds to a larger C-DAI in the DCI transmitted on the cell with the larger cell index. Taking a first DCI and a second DCI in the $N$ DCIs as an example, where the first DCI and the second DCI are any two DCIs monitored in the same monitoring occasion, the first DCI includes a first C-DAI, the second DCI includes a second C-DAI, a first cell is used for transmitting the first DCI, and a second cell is used for transmitting the second DCI. If a cell index of the first cell is smaller than a cell index of the second cell, the first C-DAI in the first DCI is smaller than the second C-DAI in the second DCI.

It should be noted that, "the cell for transmitting DCI" or "the cell is used for transmitting DCI" described in embodiments of the disclosure can mean that the DCI is transmitted on a PDCCH on the cell. For example, the first cell for transmitting the first DCI can mean that the first DCI is transmitted on a PDCCH on the first cell, and the second cell for transmitting the second DCI can mean that the second DCI is transmitted on a PDCCH on the second cell.

In another possible implementation, in the at least two DCIs in the same monitoring occasion in embodiments of the disclosure, a larger cell index of a cell for transmitting DCI corresponds to a smaller value of the C-DAI in the DCI transmitted on the cell with the larger cell index. Taking the first DCI and the second DCI monitored in the same monitoring occasion described above as an example for illustration, the first DCI includes a first C-DAI, and the second DCI includes a second C-DAI. If a cell index of a first cell for transmitting the first DCI is larger than a cell index of a second cell for transmitting the second DCI, the first C-DAI in the first DCI is smaller than the second C-DAI, which is not limited in the disclosure. It can be understood that, if the number of DCIs monitored in the same monitoring occasion is 1, the T-DAI and the C-DAI for the monitoring occasion have the same value.

In a possible design, in the *N* DCIs, a counting order of a C-DAI in each of the at least two DCIs monitored in the same monitoring occasion can be determined according to a cell index of a reference cell determined from at least one cell scheduled by the DCI. It can be understood that, the counting order of the C-DAI in each of the at least two DCIs monitored in the same monitoring occasion can be determined by the network device according to the cell index of the reference cell determined from the at least one cell scheduled by the DCI. In a possible implementation, the number of DCIs sent by the network device can be the same as or different from the number of DCIs monitored by the terminal device. Therefore, C-DAIs in the DCIs sent by the network device are consecutive, but C-DAIs in the DCIs monitored by the terminal device can be consecutive or non-consecutive. As an example, the network device sends three DCIs, where C-DAIs in the three DCIs can be 1, 2, and 3 respectively. Two of the three DCIs may be monitored by the terminal device, where C-DAIs in the two DCIs can be 1 and 3 respectively, i. e. two DCIs whose C-DAIs are non-consecutive are monitored by the terminal device. It can be understood that, the C-DAIs in the DCIs monitored by the terminal device can also be consecutive, which is not limited in the disclosure.

Exemplarily, for each of the at least two DCIs monitored in the same monitoring occasion (which can also be referred to as DAI counting occasion), a larger cell index of a reference cell determined from at least one cell scheduled by the DCI corresponds to a larger C-DAI in the DCI corresponding to the reference cell.

Taking a first DCI and a second DCI in the *N* DCIs as an example, where the first DCI and the second DCI are any two DCIs monitored in the same monitoring occasion, the first DCI includes a first C-DAI, and the second DCI includes a second C-DAI. The first DCI is used for scheduling PDSCH transmission on a first cell and PDSCH transmission on a third cell, and the second DCI is used for scheduling PDSCH transmission on a second cell and PDSCH transmission on a fourth cell. A reference cell determined from the first cell and the third cell scheduled by the first DCI is taken as a first reference cell, and a reference cell determined from the second cell and the fourth cell scheduled by the second DCI is taken as a second reference cell. If a cell index of the first reference cell is smaller than a cell index of the second reference cell, the first C-DAI in the first DCI is smaller than the second C-DAI in the second DCI. In another possible implementation, in embodiments of the disclosure, a larger cell index of a reference cell determined from at least one cell scheduled by each of the at least two DCIs can also correspond to a smaller C-DAI in the DCI corresponding to the reference cell, which is not limited in the disclosure.

The reference cell in the at least one cell scheduled by the DCI in the foregoing embodiments can be one of the at least one cell scheduled by the DCI. It can be understood that, if one cell is scheduled by the DCI, the cell scheduled is the reference cell; and if at least two cells are scheduled by the DCI, the reference cell can be one of the at least two cells scheduled. For example, the first DCI in the foregoing embodiments is used for scheduling PDSCH transmission on the first cell and PDSCH transmission on the third cell, and thus the first reference cell is one of the first cell or the third cell. The second DCI is used for scheduling PDSCH transmission on the second cell and PDSCH transmission on the fourth cell, and thus the second reference cell is one of the second cell or the fourth cell. As an example, the reference cell in the at least two cells scheduled by the DCI can be indicated by the network device, or can be specified in a protocol. As another example, the reference cell in the at least two cells scheduled by the DCI can also be determined according to a certain rule, for example, the reference cell is a cell with the maximum cell index or a cell with the minimum cell index among the at least two cells scheduled by the DCI. Taking the first DCI and the second DCI in the foregoing embodiments as an example for illustration, the first DCI is used for scheduling PDSCH transmission on the first cell and PDSCH transmission on the third cell, and thus the first reference cell is a cell with a smaller cell index in the first cell and the third cell; the second DCI is used for scheduling PDSCH transmission on the second cell and PDSCH transmission on the fourth cell, and thus the second reference cell is a cell with a smaller cell index in the second cell and the fourth cell. As another example, the first reference cell can also be a cell with a larger cell index in the first cell and the third cell, and the second reference cell is a cell with a larger cell index in the second cell and the fourth cell.

It should be noted that, the at least two DCIs monitored in the same monitoring occasion in the foregoing embodiments can be construed as at least two DCIs monitored in a certain monitoring occasion (such as the first monitoring occasion). The monitoring occasion in embodiments of the disclosure refers to a PDCCH monitoring slot and locations of symbols in the slot configured by a network side. Exemplarily, the same monitoring occasion can mean that locations of starting symbols of two or more monitoring occasions are the same. The at least two DCIs monitored in the same monitoring occasion can be understood as at least two DCIs monitored in two or more monitoring occasions having the same starting symbol location.

The counting order of the C-DAI in the DCI described in the foregoing embodiments is illustrated below with reference to the example of cells scheduled by DCI in FIG. 4a. DCI-1 is used for scheduling transmission of PDSCH-1 on cell CC0 and transmission of PDSCH 4 on cell CC3, and DCI-2 is used for scheduling transmission of PDSCH-3 on cell CC1 and transmission of PDSCH-2 on cell CC2. As illustrated in Table 2, in Option 1, the C-DAI is counted in an ascending order of a cell index of cell CC0 on which DCI-1 is transmitted and a cell index of cell CC1 on which DCI-2 is transmitted. In Option 2, a cell with a smaller cell index in the two cells scheduled by the DCI is selected as the reference cell. Therefore, CC 0 in the two cells scheduled by DCI-1 is the reference cell, and CC 1 in the two cells scheduled by DCI-2 is the reference cell. The T-DAI in DCI-1 and the T-DAI in DCI-2 are counted in an ascending order of a cell index of the reference cell determined from the cells scheduled by each of the two DCIs, and therefore, the T-DAI in DCI-1 is smaller than the T-DAI in DCI-2. In Option 3, a cell with a larger cell index in the two cells scheduled by the DCI is selected as the reference cell. Therefore, CC 3 in the two cells scheduled by DCI-1 is the reference cell, and CC 2 in the two cells scheduled by DCI-2 is the reference cell. The T-DAI in the DCI-1 and the T-DAI in the DCI-2 are counted in an ascending order of a cell index of the reference cell determined from the cells scheduled by each of the two DCIs, and therefore, the T-DAI in DCI-2 is smaller than the T-DAI in DCI-1.

Table 2

|  | C-DAI/T-DAI |  |  |
|---|---|---|---|
|  | Option 1 | Option 2 | Option 3 |
| DCI-1 | 1/2 | 1/2 | 2/2 |
| DCI-2 | 2/2 | 2/2 | 1/2 |

In addition, it should be understood that, in an embodiment, HARQ-ACK information indicates data reception on a PDSCH. For example, if the HARQ-ACK information is an ACK, the HARQ-ACK information indicates that data on the PDSCH is received correctly. For another example, if the HARQ-ACK information is a NACK, the HARQ-ACK information indicates that data on the PDSCH is received incorrectly or there is an error. In embodiments of the disclosure, HARQ-ACK information of the PDSCH on at least one cell scheduled by each of the N DCIs is multiplexed into a HARQ-ACK codebook for feedback.

In a possible implementation, the HARQ-ACK codebook can sequentially indicate HARQ-ACK information of a PDSCH on at least one cell scheduled by each of the $N$ DCIs in an ascending order of C-DAIs.

For example, the $N$ DCIs include a first DCI and a second DCI, a first C-DAI in the first DCI is smaller than a second C-DAI in the second DCI, and accordingly, in the HARQ-ACK codebook, HARQ-ACK information of a PDSCH on at least one cell scheduled by the first DCI precedes HARQ-ACK information of a PDSCH on at least one cell scheduled by the second DCI. Taking the scheduling illustrated in FIG. 4a as an example, DCI-1 is used for scheduling transmission of PDSCH-1 on cell CC0 and transmission of PDSCH4 on cell CC3, and DCI-2 is used for scheduling transmission of PDSCH-3 on cell CC1 and transmission of PDSCH-2 on cell CC2. Since the C-DAI in DCI-1 is smaller than the C-DAI in DCI-2, in the HARQ codebook, feedback information of the two cells scheduled by DCI-1 (i. e. HARQ-ACK information of PDSCH1 on CC0 and HARQ-ACK information of PDSCH4 on CC3) are arranged first, and then feedback information of the two cells scheduled by DCI-2 (i. e. HARQ-ACK information of PDSCH3 on CC1 and HARQ-ACK information of PDSCH2 on CC2) are arranged. For details thereof, reference can be made to Table 3.

Table 3

| HARQ-ACK information of PDSCH1 on CC0 | HARQ-ACK information of PDSCH4 on CC3 | HARQ-ACK information of PDSCH3 on CC1 | HARQ-ACK information of PDSCH2 on CC2 |
|---|---|---|---|

In another possible implementation, the HARQ-ACK codebook can also sequentially indicate the HARQ-ACK information of the PDSCH on the at least one cell scheduled by each of the $N$ DCIs in a descending order of C-DAIs.

For example, the $N$ DCIs include a first DCI and a second DCI, a first C-DAI in the first DCI is smaller than a second C-DAI in the second DCI, and accordingly, in the HARQ-ACK codebook, HARQ-ACK information of a PDSCH on at least one cell scheduled by the first DCI is subsequent to HARQ-ACK information of a PDSCH on at least one cell scheduled by the second DCI. Taking the scheduling illustrated in FIG. 4a as an example, DCI-1 is used for scheduling transmission of PDSCH-1 on cell CC0 and transmission of PDSCH 4 on cell CC3, and DCI-2 is used for scheduling transmission of PDSCH-3 on cell CC1 and transmission of PDSCH-2 on cell CC2. Since the C-DAI in DCI-1 is smaller than the C-DAI in DCI-2, in the HARQ codebook, feedback information of the two cells scheduled by DCI-2 (i. e. HARQ-ACK information of PDSCH3 on CC1 and HARQ-ACK information of PDSCH2 on CC2) are arranged first, and then feedback information of the two cells scheduled by DCI-1 (i. e. HARQ-ACK information of PDSCH1 on CC0 and HARQ-ACK information of PDSCH4 on CC3) are arranged. For details thereof, reference can be made to Table 4.

Table 4

| HARQ-ACK for PDSCH3 on CC1 | HARQ-ACK for PDSCH2 on CC2 | HARQ-ACK for PDSCH1 on CC0 | HARQ-ACK for PDSCH4 on CC3 |
|---|---|---|---|

In a possible implementation, the HARQ-ACK codebook can sequentially indicate HARQ-ACK information of a PDSCH on at least one cell scheduled by one of the N DCIs according to an order in which the cells are scheduled by the DCI. In other words, a sorting order of the HARQ-ACK information of the PDSCH on the at least one cell scheduled by one of the N DCIs can be indicated by the order in which the at least one cell is scheduled by the DCI.

The following will exemplify the order in which the cells are scheduled (hereinafter, "cell scheduling order" for short). For example, when scheduling PDSCH transmission on a first cell and PDSCH transmission on a second cell by one of the N DCIs, in addition to indicating a combination of the first cell and the second cell, the DCI indicates the order of the first cell and the second cell in the combination. For example, a relationship between bit information and cell combinations is configured via higher-layer signaling, and an order of cells in a cell combination is the scheduling order. Exemplarily, a cell combination corresponding to bit information 000 is CC0 and CC3, a cell combination corresponding to bit information 001 is CC1 and CC3, a cell combination corresponding to bit information 010 is CC2 and CC3, and a cell combination corresponding to bit information 011 is CC2, CC1 and CC3, where for each cell combination, a sorting order of cell indexes in the cell combination is the cell scheduling order. For example, if a certain DCI includes bit information 010, then cells scheduled by the DCI are CC2 and CC3, and CC2 precedes CC3 in the cell combination, and accordingly, a sorting order of HARQ-ACK information of PDSCHs on the two cells scheduled by the DCI is: HARQ-ACK information of a PDSCH on CC2 precedes HARQ-ACK information of a PDSCH on CC3.

In another possible implementation, the HARQ-ACK codebook can also sequentially indicate the HARQ-ACK information of the PDSCH on the at least one cell scheduled by one of the N DCIs in an ascending order of cell indexes of the cells scheduled by the DCI. In other words, the HARQ-ACK information of the PDSCH on the at least one cell scheduled by one of the N DCIs can be sorted in an ascending order of cell indexes of the at least one cell scheduled by the DCI.

An example is given below. For example, one of the N DCIs schedules PDSCH transmission on a first cell and PDSCH transmission on a second cell, where a cell index of the first cell is smaller than a cell index of the second cell, and then HARQ-ACK information of a PDSCH on the first cell precedes HARQ-ACK information of a PDSCH on the second cell. It can be understood that, the HARQ-ACK codebook can also sequentially indicate the HARQ-ACK information of the PDSCH on the at least one cell scheduled by one of the N DCIs in a descending order of cell indexes of the cells scheduled by the DCI. For example, one of the N DCIs schedules PDSCH transmission on the first cell and PDSCH transmission on the second cell, where the cell index of the first cell is smaller than the cell index of the second cell, and then the HARQ-ACK information of the PDSCH on the first cell is subsequent to the HARQ-ACK information of the PDSCH on the second cell.

In some embodiments, the number of bits used for the HARQ-ACK codebook to indicate the HARQ-ACK information of the PDSCH on the at least one cell scheduled by one of the N DCIs can be $N_{HARQ-ACK}^{max}$, where

$$N_{HARQ-ACK}^{max} = N_{TB}^{DL} * N_{PDSCH}^{max},$$ $N_{TB}^{DL}$ is the maximum number of codewords supported by one PDSCH, and $N_{PDSCH}^{max}$ is the maximum number of PDSCHs supported by one DCI.

Exemplarily, $N_{TB}^{DL}$ is the maximum number of codewords supported by one PDSCH across one cell supporting multi-cell scheduling within one PUCCH group. For example, the PUCCH group can be a PUCCH group that multiple cells for transmitting the N DCIs belong to. The PUCCH group includes at least one cell, and PUCCH transmission can be performed on only one cell in the PUCCH group, where such cell can be referred to as a PUCCH cell, while PUCCH transmission cannot be performed on other cells in the PUCCH group. That is, HARQ-ACK information of other cells is multiplexed and transmitted on the PUCCH on the PUCCH cell. Some of the at least one cell in the PUCCH group support multi-cell scheduling, where the cell supporting multi-cell scheduling can mean that the cell can be scheduled by DCI supporting multi-cell scheduling. $N_{TB}^{DL}$ can be the maximum number of codewords that can be included in one PDSCH across all cells supporting multi-cell scheduling within the PUCCH group. For example, the cell supporting multi-cell scheduling in the PUCCH group includes cell 1 and cell 3, and in this case, $N_{TB}^{DL}$ is the maximum number of codewords that can be included in one PDSCH across cell 1 and cell 3. Likewise, $N_{PDSCH}^{max}$ is the maximum number of PDSCHs that can be scheduled by one DCI across one cell supporting multi-cell scheduling within one PUCCH group. In other words, $N_{PDSCH}^{max}$ is the maximum number of PDSCHs that can be scheduled by one DCI across all cells supporting multi-cell scheduling within the PUCCH group.

For example, the maximum number of PDSCHs that can be scheduled by one DCI across one cell supporting multi-cell scheduling within the PUCCH group is 3, the maximum number of codewords in one PDSCH across one cell supporting multi-cell scheduling in the PUCCH group is 2, and then 6 bits are generated for each DCI, that is, 6 bits are used to indicate HARQ-ACK information of a PDSCH on at least one cell scheduled by one DCI.

Exemplarily, $N_{TB}^{DL}$ is the maximum number of codewords supported by one PDSCH scheduled by a multi-carrier scheduling DCI format, and $N_{PDSCH}^{max}$ is the maximum number of PDSCHs that can be scheduled by the multi-carrier scheduling DCI format. The PDSCH scheduled by the multi-carrier scheduling DCI format can be understood as a PDSCH scheduled by a DCI having the multi-carrier scheduling DCI format. The maximum number of codewords supported by one PDSCH scheduled by the multi-carrier scheduling DCI format can be understood as the maximum number of codewords that can be included in one PDSCH scheduled by a DCI having the multi-carrier scheduling DCI format. The maximum number of PDSCHs supported by the multi-carrier scheduling DCI format can be understood as the maximum number of PDSCHs that can be scheduled by a DCI having the multi-carrier scheduling DCI format.

Exemplarily, $N_{TB}^{DL}$ and $N_{PDSCH}^{max}$ can also be values reported by the terminal device, or can be values specified in a protocol, which is not limited in the disclosure.

In some optional implementations, if the number $N_{PDSCH}$ of PDSCHs scheduled by a certain DCI is less than $N_{PDSCH}^{max}$, the first $N_{PDSCH} * N_{TB}^{DL}$ bits in the HARQ codebook are used for indicating HARQ-ACK information of the $N_{PDSCH}$ PDSCHs scheduled by the DCI, and the subsequent $N_{HARQ-ACK}^{max} - N_{TB}^{DL} . N_{PDSCH}$ bits in the HARQ codebook are padding bits, where the padding bits can represent NACK. For example, DCI-1 is used for scheduling transmission of PDSCH-1 on cell CC0 and transmission of PDSCH4 on cell CC3, $N_{HARQ-ACK}^{max}$ is 6 bits, and the bits occupied by HARQ-ACK information of the two cells scheduled by DCI-1 and the sorting order thereof can be: {2 bits for PDSCH1 on CC0, 2 bits for PDSCH4 on CC3, 2 bits for NACK}.

In order to facilitate understanding of the foregoing embodiments, the HARQ-ACK codebook generated above is illustrated by taking PDSCH transmissions on two cells scheduled by a single DCI in FIG. 4a as an example. It can be understood that, FIG. 4a is only an example and does not constitute limitation on the disclosure. As illustrated in FIG. 4a, DCI-1 transmitted on cell CC0 is used for scheduling transmission of PDSCH-1 on cell CC0 and transmission of PDSCH4 on cell CC3, and DCI-2 transmitted on cell CC1 is used for scheduling transmission of PDSCH-3 on cell CC2 and transmission of PDSCH-2 on cell CC1.

If the C-DAI in each DCI is counted in an ascending order of a cell index of a cell for transmitting the DCI, and HARQ-ACK information of PDSCHs on two cells scheduled by one DCI is sorted in an ascending order of cell indexes of the two cells scheduled by the DCI, then a sorting order of HARQ-ACK information of a PDSCH on each cell in the HARQ-ACK codebook is: {HARQ-ACK information of PDSCH-1 on CC0, HARQ-ACK information of PDSCH-4 on CC3, HARQ-ACK information of PDSCH-2 on CC1, HARQ-ACK information of PDSCH-3 on CC2}.

If the C-DAI in each DCI is counted in an ascending order of a cell index of a reference cell determined from cells scheduled by the DCI, where the reference cell is a cell with the maximum cell index among the scheduled cells, and HARQ-ACK information of PDSCHs on two cells scheduled by one DCI is sorted in an ascending order of cell indexes of the two cells scheduled by the DCI, then a sorting order of HARQ-ACK information of a PDSCH on each cell in the HARQ-ACK codebook is: {HARQ-ACK information of PDSCH-2 on CC1, HARQ-ACK information of PDSCH-3 on CC2, HARQ-ACK information of PDSCH-1 on CC0, HARQ-ACK information of PDSCH-4 on CC3}.

In embodiments of the disclosure, if N multi-cell scheduling DCIs are monitored by the terminal device, that is, the N DCIs each support scheduling of PDSCH transmissions on at least two cells, send the HARQ codebook used for feeding back HARQ-ACK information of a PDSCH on at least one cell actually scheduled by each of the N DCIs, thereby designing a mechanism for HARQ-ACK feedback regarding a PDSCH(s) actually scheduled by a DCI supporting multi-cell scheduling.

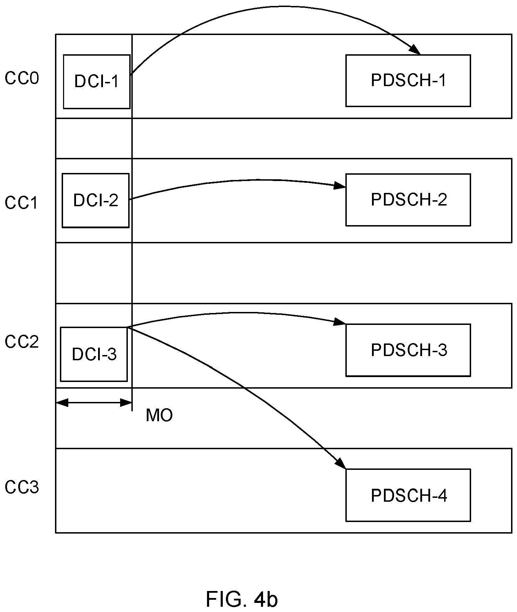

An example of feeding back the HARQ-ACK codebook for the case where the terminal device has received multi-carrier scheduling DCI as well as single-carrier scheduling DCI will be described below with reference to FIG. 4b. As an example, the terminal device has received DCI-1 on a PDCCH on cell CC0, DCI-2 on a PDCCH on cell CC1, and DCI-3 on a PDCCH on cell CC2. For example, DCI-1 is a single-carrier scheduling DCI and is used for scheduling PDSCH transmission on cell 1. DCI-2 is a single-carrier scheduling DCI and is used for scheduling PDSCH transmission on cell 2. DCI-3 is a multi-carrier scheduling DCI, and is used for scheduling PDSCH transmission on cell 3 and PDSCH transmission on cell 4.

Since a single-carrier scheduling DAI and a multi-carrier scheduling DAI are separately counted, DAI 1 in DCI-1 is counted together with DAI 2 in DCI-2, for example, {C-DAI, T-DAI} in DCI-1 and {C-DAI, T-DAI} in DCI-2 are {1, 2} and {2, 2} respectively; and DCI-3 is not counted together with the DAI in DCI-1 and the DAI in DCI-2, for example, {C-DAI, T-DAI} in DCI-3 is {1,1}. In this case, the HARQ-ACK codebook fed back by the terminal device can include two sub-codebooks, where the 1st sub-codebook contains HARQ-ACK information of a PDSCH on a cell scheduled by a single-carrier scheduling DCI, and the 2nd sub-codebook contains HARQ-ACK information of a PDSCH(s) on a cell(s) scheduled by a multi-carrier scheduling DCI. The two sub-codebooks are arranged sequentially, and the 2nd sub-codebook is arranged subsequent to the 1st sub-codebook. The 1st sub-codebook contains HARQ-ACK information of PDSCH-1 scheduled by DCI-1 and HARQ-ACK information of PDSCH-2 scheduled by DCI-2, and the 2nd sub-codebook contains HARQ-ACK information of PDSCH-3 scheduled by DCI-3 and HARQ-ACK information of PDSCH-4 scheduled by DCI-3. The HARQ-ACK codebook in embodiments of FIG. 3 of embodiments of the disclosure can be understood as the 2nd sub-codebook in this embodiment. An order in which the terminal device feeds back the HARQ-ACK information of the PDSCH on cell CC0, the HARQ-ACK information of the PDSCH on cell CC1, the HARQ-ACK information of the PDSCH on cell CC2, and the HARQ-ACK information of the PDSCH on cell CC3 is: {HARQ-ACK information of PDSCH-1 on cell CC0, HARQ-ACK information of PDSCH-2 on cell CC1} {HARQ-ACK information of PDSCH-3 on cell CC2, HARQ-ACK information of PDSCH-4 on cell CC3}.

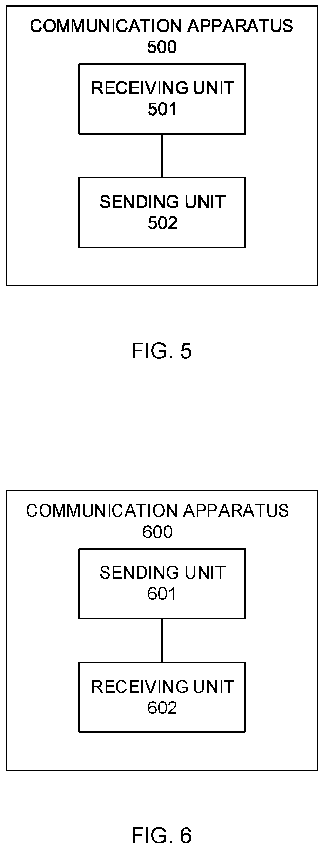

Referring to FIG. 5, FIG. 5 is a schematic structural diagram of a communication apparatus provided in embodiments of the disclosure. The apparatus may be a terminal device, or may be an apparatus in the terminal device, for example, may be a chip or a chip module in the terminal device, or may be an apparatus that can be used in cooperation with the terminal device. The communication apparatus 500 illustrated in FIG. 5 may include a receiving unit 501 and a sending unit 502. The receiving unit 501 is configured to receive N DCIs, where the $N$ DCIs each support scheduling of PDSCH transmissions on at least two cells, and $N$ is a positive integer and $N \geq 1$. The sending unit 502 is configured to send a HARQ-ACK codebook, where the HARQ-ACK codebook is used for feeding back HARQ-ACK information of a PDSCH on at least one cell scheduled by each of the $N$ DCIs.

In an optional implementation, the reception unit 501 is specifically configured to receive the $N$ DCIs in a first monitoring occasion.

In an optional implementation, the HARQ-ACK codebook sequentially indicates the HARQ-ACK information of the PDSCH on the at least one cell scheduled by each of the N DCIs in an ascending order of C-DAIs. Alternatively, the HARQ-ACK codebook sequentially indicates the HARQ-ACK information of the PDSCH on the at least one cell scheduled by each of the $N$ DCIs in a descending order of C-DAIs.

In an optional implementation, the $N$ DCIs include a first DCI and a second DCI, where the first DCI includes a first C-DAI, and the first DCI is used for scheduling PDSCH transmission on at least one cell; and the second DCI includes a second C-DAI, and the second DCI is used for scheduling PDSCH transmission on at least one cell. If a cell index of a first cell is smaller than a cell index of a second cell, the first C-DAI is smaller than the second C-DAI, where the first cell is used for transmission of the first DCI, and the second cell is used for transmission of the second DCI.

In an optional implementation, the N DCIs include a first DCI and a second DCI, where the first DCI includes a first C-DAI, and the first DCI is used for scheduling PDSCH transmission on a first cell and PDSCH transmission on a third cell; and the second DCI includes a second C-DAI, and the second DCI is used for scheduling PDSCH transmission on a second cell and PDSCH transmission on a fourth cell. If a cell index of a first reference cell is smaller than a cell index of a second reference cell, the first C-DAI is smaller than the second C-DAI, where the first reference cell is one of the first cell or the third cell, and the second reference cell is one of the second cell or the fourth cell.

In an optional implementation, the first reference cell is a cell with a smaller cell index in the first cell and the third cell, and the second reference cell is a cell with a smaller cell index in the second cell and the fourth cell. Alternatively, the first reference cell is a cell with a larger cell index in the first cell and the third cell, and the second reference cell is a cell with a larger cell index in the second cell and the fourth cell.

In an optional implementation, the HARQ-ACK codebook sequentially indicates HARQ-ACK information of a PDSCH on at least one cell scheduled by one of the $N$ DCIs according to an order in which the cells are scheduled by the DCI. Alternatively, the HARQ-ACK codebook sequentially indicates the HARQ-ACK information of the PDSCH on the at least one cell scheduled by one of the N DCIs in an ascending order of cell indexes of the cells scheduled by the DCI.

In an optional implementation, the number of bits used for the HARQ-ACK codebook to indicate the HARQ-ACK information of the PDSCH on the at least one cell scheduled by one of the $N$ DCIs is $N_{\mathrm{HARQ-ACK}}^{\max}$, where $N_{\mathrm{HARQ-ACK}}^{\max} = N_{\mathrm{TB}}^{\mathrm{DL}} * N_{\mathrm{PDSCH}}^{\max}$, $N_{\mathrm{TB}}^{\mathrm{DL}}$ is the maximum number of codewords in one PDSCH configured by a network device, and $N_{\mathrm{PDSCH}}^{\max}$ is the maximum number of PDSCHs scheduled by one DCI configured by the network device.

In an optional implementation, "$N_{\mathrm{TB}}^{\mathrm{DL}}$ is the maximum number of codewords in one PDSCH configured by the network device" means that: $N_{\mathrm{TB}}^{\mathrm{DL}}$ is the maximum number of codewords in one PDSCH across a cell supporting multi-cell scheduling within a PUCCH group configured by the network device; or $N_{\mathrm{TB}}^{\mathrm{DL}}$ is the maximum number of codewords in one PDSCH scheduled by a multi-carrier scheduling DCI format configured by the network device.

In an optional implementation, " $N_{\text{PDSCH}}^{\max}$ is the maximum number of PDSCHs scheduled by one DCI configured by the network device" means that: $N_{\text{PDSCH}}^{\max}$ is the maximum number of PDSCHs scheduled by one DCI within a PUCCH group configured by the network device; or $N_{\text{PDSCH}}^{\max}$ is the maximum number of PDSCHs scheduled by a multi-carrier scheduling DCI format configured by the network device.

For related contents of this implementation, reference can be made to related content of the foregoing method embodiments, which will not be described again herein.

Referring to FIG. 6, FIG. 6 is a schematic structural diagram of another communication apparatus provided in embodiments of the disclosure. The apparatus may be a network device, or may be an apparatus in the network device, for example, may be a chip or a chip module in the network device, or an apparatus that can be used in cooperation with the network device. The communication apparatus 600 illustrated in FIG. 6 may include a sending unit 601 and a receiving unit 602. The sending unit 601 is configured to send $M$ DCIs, where the $M$ DCIs each support scheduling of PDSCH transmissions on at least two cells, and $M$ is a positive integer and $M \geq 1$. The receiving unit 602 is configured to receive a HARQ-ACK codebook sent by a terminal device, where the HARQ-ACK codebook is used for feeding back HARQ-ACK information of a PDSCH on at least one cell scheduled by each of $N$ DCIs, and the $M$ DCIs include the $N$ DCIs.

In an optional implementation, the HARQ-ACK codebook sequentially indicates the HARQ-ACK information of the PDSCH on the at least one cell scheduled by each of the $N$ DCIs in an ascending order of C-DAIs. Alternatively, the HARQ-ACK codebook sequentially indicates the HARQ-ACK information of the PDSCH on the at least one cell scheduled by each of the $N$ DCIs in a descending order of C-DAIs.

In an optional implementation, the $M$ DCIs include a first DCI and a second DCI, where the first DCI includes a first C-DAI, and the first DCI is used for scheduling PDSCH transmission on at least one cell; and the second DCI includes a second C-DAI, and the second DCI is used for scheduling PDSCH transmission on at least one cell. If a cell index of a first cell is smaller than a cell index of a second cell, the first C-DAI is smaller than the second C-DAI, where the first cell is used for transmission of the first DCI, and the second cell is used for transmission of the second DCI.

In an optional implementation, the $M$ DCIs include a first DCI and a second DCI, where the first DCI includes a first C-DAI, and the first DCI is used for scheduling PDSCH transmission on a first cell and PDSCH transmission on a third cell; and the second DCI includes a second C-DAI, and the second DCI is used for scheduling PDSCH transmission on a second cell and PDSCH transmission on a fourth cell. If a cell index of a first reference cell is smaller than a cell index of a second reference cell, the first C-DAI is smaller than the second C-DAI, where the first reference cell is one of the first cell or the third cell, and the second reference cell is one of the second cell or the fourth cell.

In an optional implementation, the first reference cell is a cell with a smaller cell index in the first cell and the third cell, and the second reference cell is a cell with a smaller cell index in the second cell and the fourth cell. Alternatively, the first reference cell is a cell with a larger cell index in the first cell and the third cell, and the second reference cell is a cell with a larger cell index in the second cell and the fourth cell.

In an optional implementation, the HARQ-ACK codebook sequentially indicates HARQ-ACK information of a PDSCH on at least one cell scheduled by one of the N DCIs according to an order in which the cells are scheduled by the DCI. Alternatively, the HARQ-ACK codebook sequentially indicates the HARQ-ACK information of the PDSCH on the at least one cell scheduled by one of the $N$ DCIs in an ascending order of cell indexes of the cells scheduled by the DCI.

In an optional implementation, the number of bits used for the HARQ-ACK codebook to indicate the HARQ-ACK information of the PDSCH on the at least one cell scheduled by one of the $N$ DCIs is $N_{\text{HARQ-ACK}}^{\max}$ , where $N_{\text{HARQ-ACK}}^{\max} = N_{\text{TB}}^{\text{DL}} * N_{\text{PDSCH}}^{\max}$, $N_{\text{TB}}^{\text{DL}}$ is the maximum number of codewords in one PDSCH configured by a network device, and $N_{\text{PDSCH}}^{\max}$ is the maximum number of PDSCHs scheduled by one DCI configured by the network device.

In an optional implementation, " $N_{\text{TB}}^{\text{DL}}$ is the maximum number of codewords in one PDSCH configured by the network device" means that: $N_{\text{TB}}^{\text{DL}}$ is the maximum number of codewords in one PDSCH across a cell supporting multi-cell scheduling within a PUCCH group configured by the network device; or $N_{\text{TB}}^{\text{DL}}$ is the maximum number of codewords in one PDSCH scheduled by a multi-carrier scheduling DCI format configured by the network device.

In an optional implementation, " $N_{\text{PDSCH}}^{\max}$ is the maximum number of PDSCHs scheduled by one DCI configured by the network device" means that: $N_{\text{PDSCH}}^{\max}$ is the maximum number of PDSCHs scheduled by one DCI within a PUCCH group configured by the network device; or $N_{\text{PDSCH}}^{\max}$ is the maximum number of PDSCHs scheduled by a multi-carrier scheduling DCI format configured by the network device.

For related contents of this implementation, reference can be made to related content of the foregoing method embodiments, which will not be described again herein.

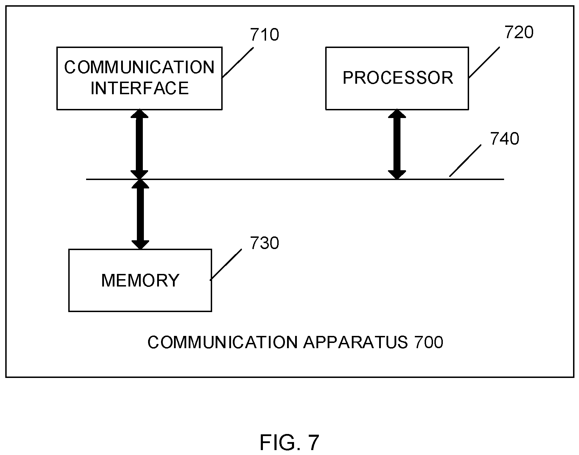

Referring to FIG. 7, FIG. 7 is a schematic structural diagram of another communication apparatus provided in embodiments of the disclosure. The apparatus is configured to implement functions of the terminal device in FIG. 3. The communication apparatus 700 may be a terminal device or an apparatus applied to the terminal device, where the apparatus applied to the terminal device may be an SOC or a chip in the terminal device. The chip SOC may be formed by a chip, or may include a chip and other discrete components. Alternatively, the communication apparatus 700 is configured to implement functions of the network device in FIG. 3. The communication apparatus may be a network device or an apparatus applied to the network device, where the apparatus applied to the network device may be an SOC or a chip in the network device.

The communication apparatus 700 includes at least one processor 720, where the processor 720 is configured to implement a data processing function of the terminal device or the network device in the method provided in embodiments of the disclosure. The apparatus 700 can further include a communication interface 710, where the communication interface 710 is configured to implement a transmission and reception operation of the terminal device or the network device in the method provided in embodiments of the disclosure. In embodiments of the disclosure, the processor 720 may be a central processing unit (CPU), and the processor may also be another general-purpose processor, a digital signal processor (DSP), an application specific integrated circuit (ASIC), a field-programmable gate array (FPGA), or other programmable logic devices, discrete gates or transistor logic devices, discrete hardware components, or the like. The general-purpose processor may be a microprocessor, or the processor may also be any conventional processor. In embodiments of the disclosure, the communication interface 710 may be a transceiver, a circuit, a bus, a module, or other types of communication interface for communicating over a transmission medium and other devices. For example, the communication interface 710 is configured to enable an apparatus in the communication apparatus 700 to communicate with another device, and the processor 720 is configured to receive and send data via the communication interface 710, and is configured to implement the method described in the foregoing method embodiments illustrated in FIG. 3.

The communication apparatus 700 may also include at least one memory 730, where the memory 730 is configured to store program instructions and/or data. The memory 730 is coupled to the processor 720. The coupling in embodiments of the disclosure is indirect coupling or communication connection between apparatuses, units, or modules, and may be electrical, mechanical, or otherwise, and is intended for information interchange between the apparatuses, units, or modules. The processor 720 may operate in conjunction with the memory 730. The processor 720 may execute the program instructions stored in the memory 730. At least one of the at least one memory may be included in the processor.

After the communication apparatus 700 is powered on, the processor 720 may read software programs in the memory 730, interpret and execute instructions of the software programs, and process data of the software programs. When data needs to be sent in a wireless manner, after performing baseband processing on the data to be sent, the processor 720 outputs a baseband signal to a radio frequency circuit (not illustrated in the figure); and after performing radio frequency processing on the baseband signal, the radio frequency circuit sends a radio frequency signal outwards in the form of an electromagnetic wave through an antenna. When data is sent to the apparatus 700, the radio frequency circuit receives a radio frequency signal through an antenna, converts the radio frequency signal into a baseband signal, and outputs the baseband signal to the processor 720. The processor 720 converts the baseband signal into data and processes the data.

In another implementation, the radio frequency circuit and the antenna may be disposed separately from the processor 720 configured for performing baseband processing. For example, in a distributed scenario, the radio frequency circuit and the antenna may be disposed in a remote manner separately from the communication apparatus.

In embodiments of the disclosure, there is no limitation on the connection medium between the communication interface 710, the processor 720, and the memory 730. In embodiments of the disclosure, in FIG. 7, the memory 730, the processor 720, and the communication interface 710 are connected via a bus 740, where the bus is illustrated by a thick line in FIG. 7, and the manner for connection between other components is intended for illustrative purpose only and does not constitute limitation. The bus may be classified into an address bus, a data bus, a control bus, and the like. For ease of illustration, only one thick line is used in FIG. 7, but it does not mean that there is only one bus or one type of bus.

When the communication apparatus 700 is specifically applied to a terminal device, for example, when the communication apparatus 700 is specifically a chip or an SOC, a baseband signal may be output or received by the communication interface 710. When the communication apparatus 700 is specifically a terminal device, a radio frequency signal may be output or received by the communication interface 710.

It should be noted that, the communication apparatus may perform steps related to the terminal device or the network device in the foregoing method embodiments. For details thereof, reference can be made to the implementations provided in the foregoing steps, which will not be described again herein.

With regard to various devices and products applied to or integrated into the communication apparatus, various modules therein can all be implemented in the form of circuit and hardware, Different modules may be located in the same component (for example, a chip, a circuit module, and so on) or different components in the terminal, Alternatively, at least some of the modules may be implemented by using a software program running on a processor integrated inside the terminal, and the remaining (if any) part of the modules may be implemented by hardware such as circuits.

The memory may be a volatile memory or a non-volatile memory, or may include both the volatile memory and the non-volatile memory. The non-volatile memory may be a read-only memory (ROM), a programmable ROM (PROM), an erasable PROM (EPROM), an electrically EPROM (EEPROM), or flash memory. The volatile memory can be a random-access memory (RAM) that acts as an external cache. By way of example but not limitation, many forms of RAM are available, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DR RAM).

Embodiments of the disclosure provide a chip. The chip includes a processor and a memory, where the number of processors can be one or multiple, and the number of memories can be one or multiple. The processor may perform the communication method illustrated in FIG. 3 and steps in related implementations by reading instructions and data stored in the memory.

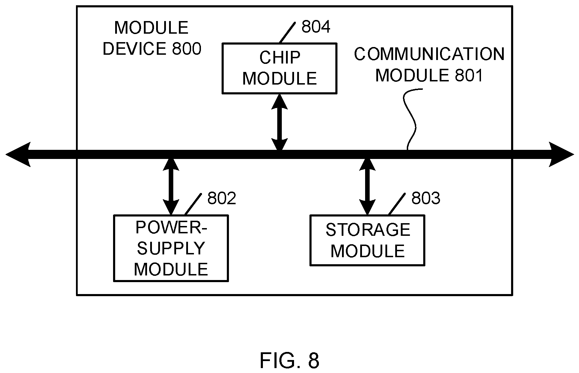

As illustrated in FIG. 8, FIG. 8 is a schematic structural diagram of a module device provided in embodiments of the disclosure. The module device 800 may perform steps related to the terminal device or the network device in the foregoing method embodiments. The module device 800 includes a communication module 801, a power-supply module 802, a storage module 803, and a chip module 804. The power-supply module 802 is configure to supply power to the module device. The storage module 803 is configure to store data and/or instructions. The communication module 801 is configure to communicate with an external device. The chip module 804 is configure to invoke the data and/or the instructions stored in the storage module 803, to perform, in cooperation with the communication module 801, the foregoing communication method illustrated in FIG. 3 and steps in related implementations.

Embodiments of the disclosure further provide a computer-readable storage medium. The computer-readable storage medium stores computer programs. The computer programs include program instructions which, when executed by an electronic device, are operable to perform steps implemented by the terminal device in the communication method illustrated in FIG. 3 or steps implemented by the network device in the communication method illustrated in FIG. 3.

The computer-readable storage medium may be an internal storage unit of the terminal device or the network device according to any one of the foregoing embodiments, for example, a hard disk or a memory of the device. The computer-readable storage medium may also be an external storage device of the terminal device or the network device, such as a plug-in hard disk, a smart media card (SMC), a secure digital (SD) card, and a flash card that are equipped on the device. Further, the computer-readable storage medium may also include both an internal storage unit and an external storage device of the terminal device or the network device. The computer-readable storage medium is configured to store computer programs and other programs and data required for the terminal device or the network device. The computer-readable storage medium may also be used to temporarily store data that has been output or is to be output. The computer-readable storage medium may be any available medium that can be accessed by a computer, or a data storage device such as a server or a data center that includes one or more available medium sets. The available medium may be a magnetic medium (e. g., floppy disk, hard disk, magnetic tape), an optical medium (e. g., digital video disc (DVD)), or a semiconductor medium. The semiconductor medium may be a solid state disk.

For each module/unit included in an apparatus or a product described in the embodiments above, each module/unit may be a software module/unit, a hardware module/unit, or may be partially a software module/unit and partially a hardware module/unit. For example, for each apparatus and product applied to or integrated into the chip, each module/unit included can be implemented by hardware such as circuits, or at least part of modules/units can be implemented by software programs that run on a processor integrated into the chip, and the rest (if any) of modules/units can be implemented by hardware such as circuits. For each apparatus and product applied to or integrated into the chip module, each module/unit included can be implemented by hardware such as circuit, and different module/units can be located in the same component (such as a chip, a circuit module, and the like) or different components of the chip module. Alternatively, at least part of module/units can be implemented by software programs that run on the processor integrated into the chip module, and the rest (if any) of module/units can be implemented by hardware such as circuits. For each apparatus and product applied to or integrated into a data acquisition node, each module/unit included can be implemented by hardware such as circuits, and different module/units can be located in the same component (such as a chip, a circuit module, and the like) or different components in the terminal, or at least part of module/units can be implemented by software programs that run on the processor integrated into the data acquisition node, and the rest (if any) of modules/units can be implemented by hardware such as circuits.

The embodiments described above can be implemented through software, hardware, firmware, or any other combination thereof. When implemented by software, all or part of the functions can be implemented in the form of a computer program product. The computer program product includes one or more computer instructions or computer programs. When the computer instructions or the computer programs are applied and executed on a computer, all or part of the operations or functions of embodiments of the disclosure are performed. The computer can be a general-purpose computer, a special-purpose computer, a computer network, or other programmable apparatuses. The computer instruction can be stored in a computer-readable storage medium, or transmitted from one computer-readable storage medium to another computer-readable storage medium. For example, the computer instruction can be transmitted from one website, computer, server, or data center to another website, computer, server, or data center in a wired manner or in a wireless manner.

It should be understood that, in various embodiments of the disclosure, the magnitude of a sequence number of each process does not mean an order of execution, and the order of execution of each process should be determined according to its function and an internal logic and shall not constitute any limitation to the implementation of embodiments of the disclosure.

It will be appreciated that the systems, apparatuses, and methods disclosed in embodiments of the disclosure may also be implemented in various other manners. For example, the above apparatus embodiments are merely illustrative, e.g., the division of units is only a division of logical functions, and other manners of division may be available in practice, e.g., multiple units or assemblies may be combined or may be integrated into another system, or some features may be ignored or skipped. In other respects, the coupling or direct coupling or communication connection as illustrated or discussed may be an indirect coupling or communication connection through some interface, device, or unit, and may be electrical, mechanical, or otherwise.

Separated units as illustrated may or may not be physically separated. Components displayed as units may or may not be physical units, and may reside at one location or may be distributed to multiple networked units. Some or all of the units may be selectively adopted according to practical needs to achieve desired objectives of the disclosure.

In addition, various functional units described in various embodiments of the disclosure may be integrated into one processing unit or may be present as a number of physically separated units, and two or more units may be integrated into one. The integrated unit may be implemented in a form of hardware, or may be implemented in a form of hardware and a software functional unit.

The integrated unit implemented in the form of a software functional unit may be stored in a computer-readable storage medium. The software functional unit is stored in a storage medium, and includes multiple instructions for instructing a computer device (which may be a personal computer, a server, a gateway node, or the like) to perform part of the steps of the method described in embodiments of the disclosure.

Those of ordinary skill in the art may understand that all or some of the processes of the method in embodiments may be implemented by computer programs instructing relevant hardware. The programs may be stored in a computer-readable storage medium. When the programs are executed, the processes of the method in embodiments are performed. The storage medium may be a magnetic disk, an optical disk, a ROM, a RAM, or the like.

The above is only preferred embodiments of the disclosure, and shall not be construed as limitation on the scope of the disclosure. Those of ordinary skill in the art can understand that all or some of the processes for implementing the above embodiments, as well as equivalent changes made according to the claims of the disclosure, still fall within the scope of the disclosure.

**Claims**

1.   A communication method, comprising:

monitoring $N$ downlink control information (DCIs), wherein the $N$ DCIs each support scheduling of physical downlink shared channel (PDSCH) transmissions on at least two cells, and $N$ is a positive integer and $N \geq 1$; and
sending a hybrid automatic repeat request-acknowledgement (HARQ-ACK) codebook, wherein the HARQ-ACK codebook is used for feeding back HARQ-ACK information of a PDSCH on at least one cell scheduled by each of the $N$ DCIs.

2.   The method of claim 1, wherein monitoring the $N$ DCIs comprises:
monitoring the $N$ DCIs in a first monitoring occasion.

3.   The method of claim 1 or 2, wherein the HARQ-ACK codebook sequentially indicates the HARQ-ACK information of the PDSCH on the at least one cell scheduled by each of the $N$ DCIs in an ascending order of counter-downlink assignment indexes (C-DAIs).

4.   The method of any of claims 1 to 3, wherein for each of at least two DCIs monitored in the same monitoring occasion, a counting order of a C-DAI in the DCI is determined according to a cell index of a reference cell determined from at least one cell scheduled by the DCI.

5. The method of claim 4, wherein for each of the at least two DCIs monitored in the same monitoring occasion, a larger cell index of a reference cell determined from at least one cell scheduled by the DCI corresponds to a larger C-DAI in the DCI corresponding to the reference cell.

6. The method of any of claims 1 to 4, wherein the N DCIs comprise a first DCI and a second DCI, the first DCI comprises a first C-DAI, and the second DCI comprises a second C-DAI; and wherein
in response to a cell index of a first cell being smaller than a cell index of a second cell, the first C-DAI is smaller than the second C-DAI, wherein the first cell is used for transmission of the first DCI, and the second cell is used for transmission of the second DCI.

7. The method of any of claims 1 to 4, wherein the N DCIs comprise a first DCI and a second DCI; the first DCI comprises a first C-DAI, and the first DCI is used for scheduling PDSCH transmission on a first cell and PDSCH transmission on a third cell; and the second DCI comprises a second C-DAI, and the second DCI is used for scheduling PDSCH transmission on a second cell and PDSCH transmission on a fourth cell; and wherein

in response to a cell index of a first reference cell being smaller than a cell index of a second reference cell, the first C-DAI is smaller than the second C-DAI, wherein
the first reference cell is one of the first cell or the third cell, and the second reference cell is one of the second cell or the fourth cell.

8. The method of claim 7, wherein the first reference cell is a cell with a smaller cell index in the first cell and the third cell, and the second reference cell is a cell with a smaller cell index in the second cell and the fourth cell.

9. The method of any of claims 1 to 3, wherein

the HARQ-ACK codebook sequentially indicates HARQ-ACK information of a PDSCH on at least one cell scheduled by one of the N DCIs according to an order in which the cells are scheduled by the DCI; or
the HARQ-ACK codebook sequentially indicates the HARQ-ACK information of the PDSCH on the at least one cell scheduled by one of the N DCIs in an ascending order of cell indexes of the cells scheduled by the DCI.

10. The method of any of claims 1 to 9, wherein the number of bits used for the HARQ-ACK codebook to indicate the HARQ-ACK information of the PDSCH on the at least one cell scheduled by one of the N DCIs is $N_{\text{HARQ-ACK}}^{\max}$, wherein $N_{\text{HARQ-ACK}}^{\max} = N_{\text{TB}}^{\text{DL}} * N_{\text{PDSCH}}^{\max}$, $N_{\text{TB}}^{\text{DL}}$ is the maximum number of codewords supported by one PDSCH, and $N_{\text{PDSCH}}^{\max}$ is the maximum number of PDSCHs supported by one DCI.

11. The method of claim 10, wherein $N_{\text{TB}}^{\text{DL}}$ being the maximum number of codewords supported by one PDSCH comprises:

$N_{\text{TB}}^{\text{DL}}$ is the maximum number of codewords supported by one PDSCH across one cell supporting multi-cell scheduling within one physical uplink control channel (PUCCH) group; or $N_{\text{TB}}^{\text{DL}}$ is the maximum number of codewords supported by one PDSCH scheduled by a multi-carrier scheduling DCI format.

12. The method of claim 10, wherein $N_{\text{PDSCH}}^{\max}$ being the maximum number of PDSCHs supported by one DCI comprises:

$N_{\text{PDSCH}}^{\max}$ is the maximum number of PDSCHs that can be scheduled by one DCI across one cell supporting multi-cell scheduling within one PUCCH group; or $N_{\text{PDSCH}}^{\max}$ is the maximum number of PDSCHs that can be scheduled by a multi-carrier scheduling DCI format.

13. A communication method, comprising:

sending *M* downlink control information (DCIs), wherein the M DCIs comprise at least one DCI, and the at least one DCI each supports scheduling of physical downlink shared channel (PDSCH) transmissions on at least two cells, and *M* is a positive integer and $M \geq 1$; and

receiving a hybrid automatic repeat request-acknowledgement (HARQ-ACK) codebook sent by a terminal device, wherein the HARQ-ACK codebook is used for feeding back HARQ-ACK information of a PDSCH on at least one cell scheduled by each of the N DCIs in the at least one DCI.

14. The method of claim 13, wherein the HARQ-ACK codebook sequentially indicates the HARQ-ACK information of the PDSCH on the at least one cell scheduled by each of the *N* DCIs in an ascending order of counter-downlink assignment indexes (C-DAIs).

15. The method of claim 13 or 14, wherein for each of at least two DCIs monitored in the same monitoring occasion, a counting order of a C-DAI in the DCI is determined according to a cell index of a reference cell determined from at least one cell scheduled by the DCI.

16. The method of claim 15, wherein for each of the at least two DCIs monitored in the same monitoring occasion, a larger cell index of a reference cell determined from at least one cell scheduled by the DCI corresponds to a larger C-DAI in the DCI corresponding to the reference cell.

17. The method of any of claims 13 to 16, wherein the at least one DCI comprises a first DCI and a second DCI; the first DCI comprises a first C-DAI, and the first DCI is used for scheduling PDSCH transmission on at least one cell; and the second DCI comprises a second C-DAI, and the second DCI is used for scheduling PDSCH transmission on at least one cell; and wherein

in response to a cell index of a first cell being smaller than a cell index of a second cell, the first C-DAI is smaller than the second C-DAI, wherein the first cell is used for transmission of the first DCI, and the second cell is used for transmission of the second DCI.

18. The method of any of claims 13 to 16, wherein the at least one DCI comprises a first DCI and a second DCI; the first DCI comprises a first C-DAI, and the first DCI is used for scheduling PDSCH transmission on a first cell and PDSCH transmission on a third cell; and the second DCI comprises a second C-DAI, and the second DCI is used for scheduling PDSCH transmission on a second cell and PDSCH transmission on a fourth cell; and wherein

in response to a cell index of a first reference cell being smaller than a cell index of a second reference cell, the first C-DAI is smaller than the second D-DAI, wherein the first reference cell is one of the first cell or the third cell, and the second reference cell is one of the second cell or the fourth cell.

19. The method of claim 18, wherein the first reference cell is a cell with a smaller cell index in the first cell and the third cell, and the second reference cell is a cell with a smaller cell index in the second cell and the fourth cell.

20. The method of any of claims 13 to 16, wherein

the HARQ-ACK codebook sequentially indicates HARQ-ACK information of a PDSCH on at least one cell scheduled by one of the N DCIs according to an order in which the cells are scheduled by the DCI; or

the HARQ-ACK codebook sequentially indicates the HARQ-ACK information of the PDSCH on the at least one cell scheduled by one of the *N* DCIs in an ascending order of cell indexes of the cells scheduled by the DCI.

21. The method of any of claims 13 to 20, wherein the number of bits used for the HARQ-ACK codebook to indicate the HARQ-ACK information of the PDSCH on the at least one cell scheduled by one of the *N* DCIs is $N_{\text{HARQ}-\text{ACK}}^{\max}$,

wherein $N_{\text{HARQ}-\text{ACK}}^{\max} = N_{\text{TB}}^{\text{DL}} * N_{\text{PDSCH}}^{\max}$, $N_{\text{TB}}^{\text{DL}}$ is the maximum number of codewords supported by one PDSCH, and $N_{\text{PDSCH}}^{\max}$ is the maximum number of PDSCHs supported by one DCI.

22. The method of claim 21, wherein $N_{\mathrm{TB}}^{\mathrm{DL}}$ being the maximum number of codewords supported by one PDSCH comprises:

$N_{\mathrm{TB}}^{\mathrm{DL}}$ is the maximum number of codewords supported by one PDSCH across one cell supporting multi-cell scheduling within one physical uplink control channel (PUCCH) group; or $N_{\mathrm{TB}}^{\mathrm{DL}}$ is the maximum number of codewords supported by one PDSCH scheduled by a multi-carrier scheduling DCI format.

23. The method of claim 21, wherein $N_{\mathrm{PDSCH}}^{\mathrm{max}}$ being the maximum number of PDSCHs supported by one DCI comprises:

$N_{\mathrm{PDSCH}}^{\mathrm{max}}$ is the maximum number of PDSCHs that can be scheduled by one DCI across one cell supporting multi-cell scheduling within one PUCCH group; or $N_{\mathrm{PDSCH}}^{\mathrm{max}}$ is the maximum number of PDSCHs that can be scheduled by a multi-carrier scheduling DCI format.

24. A communication apparatus, comprising:

a receiving unit configured to receive *N* downlink control information (DCIs), wherein the *N* DCIs each support scheduling of physical downlink shared channel (PDSCH) transmissions on at least two cells, and *N* is a positive integer and $N \geq 1$; and
a sending unit configured to send a hybrid automatic repeat request-acknowledgement (HARQ-ACK) codebook, wherein the HARQ-ACK codebook is used for feeding back HARQ-ACK information of a PDSCH on at least one cell scheduled by each of the *N* DCIs.

25. A communication apparatus, comprising:

a sending unit configured to send *M* downlink control information (DCIs), wherein the *M* DCIs comprise at least one DCI, and the at least one DCI each supports scheduling of physical downlink shared channel (PDSCH) transmissions on at least two cells, and *M* is a positive integer and $M \geq 1$; and
a receiving unit configured to receive a hybrid automatic repeat request-acknowledgement (HARQ-ACK) codebook sent by a terminal device, wherein the HARQ-ACK codebook is used for feeding back HARQ-ACK information of a PDSCH on at least one cell scheduled by each of the *N* DCIs in the at least one DCI.

26. A communication apparatus, comprising a processor and a memory, wherein the processor and the memory are connected to each other, and wherein

the memory is configured to store computer programs, wherein the computer programs comprise program instructions; and
the processor is configured to invoke the program instructions to perform the method of any of claims 1 to 12 or the method of any of claims 13 to 23.

27. A chip, comprising a processor and an interface, wherein the processor is coupled to the interface, and wherein

the interface is configured to receive or output a signal; and
the processor is configured to execute code instructions to perform the method of any of claims 1 to 12 or the method of any of claims 13 to 23.

28. A module device, comprising:

a power-supply module configured to supply power to the module device;
a storage module configured to store data and/or instructions;
a communication module configured to communicate with an external device; and
a chip module configured to invoke the data and/or the instructions stored in the storage module, to perform the method of any of claims 1 to 12 or the method of any of claims 13 to 23 in cooperation with the communication module.

29. A computer-readable storage medium, configured to store computer programs, wherein the computer programs comprise program instructions which, when executed by an electronic device, are operable to perform the method of any of claims 1 to 12 or the method of any of claims 13 to 23.

DCI

PDSCH

ACK/NACK

K0

K1

FIG. 1

102

TERMINAL
DEVICE

101

NETWORK DEVICE

FIG. 2

NETWORK
DEVICE

TERMINAL
DEVICE

301, NETWORK DEVICE SENDS M DCIs

302, TERMINAL DEVICE SENDS HARQ-ACK CODEBOOK IF N DCIs ARE
MONITORED BY TERMINAL DEVICE AND THE N DCIs EACH SUPPORT
SCHEDULING OF PDSCH TRANSMISSIONS ON AT LEAST TWO CELLS

FIG. 3

FIG. 4a

FIG. 4b

COMMUNICATION APPARATUS
500

RECEIVING UNIT
501

SENDING UNIT
502

FIG. 5

COMMUNICATION APPARATUS
600

SENDING UNIT
601

RECEIVING UNIT
602

FIG. 6

COMMUNICATION
INTERFACE 710

PROCESSOR 720

740

MEMORY 730

COMMUNICATION APPARATUS 700

FIG. 7

FIG. 8

| INTERNATIONAL SEARCH REPORT | International application No. |
|---|---|
| | **PCT/CN2023/105214** |

**A.     CLASSIFICATION OF SUBJECT MATTER**

H04L1/18(2023.01)i

According to International Patent Classification (IPC) or to both national classification and IPC

**B.     FIELDS SEARCHED**

Minimum documentation searched (classification system followed by classification symbols)

IPC:H04L,H04W

Documentation searched other than minimum documentation to the extent that such documents are included in the fields searched

Electronic data base consulted during the international search (name of data base and, where practicable, search terms used)

CNTXT, ENTXTC, DWPI, 3GPP: 监听, 侦听, DCI, PDSCH, HARQ, 反馈, 多个, 两个, 不止一个, 至少一个, monitor, detect, response, feedback

**C.     DOCUMENTS CONSIDERED TO BE RELEVANT**

| Category* | Citation of document, with indication, where appropriate, of the relevant passages | Relevant to claim No. |
|---|---|---|
| X | WO 2022040964 A1 (HUAWEI TECHNOLOGIES CO., LTD.) 03 March 2022 (2022-03-03) claims 1-22 | 1-29 |
| A | WO 2022029295 A1 (TELEFONAKTIEBOLAGET LM ERICSSON (PUBL)) 10 February 2022 (2022-02-10) entire document | 1-29 |
| A | WO 2021031754 A1 (HUAWEI TECHNOLOGIES CO., LTD.) 25 February 2021 (2021-02-25) entire document | 1-29 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **28 September 2023** | **11 October 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/105214**

| Patent document cited in search report | | | Publication date (day/month/year) | Patent family member(s) | | | Publication date (day/month/year) |
|---|---|---|---|---|---|---|---|
| WO | 2022040964 | A1 | 03 March 2022 | EP | 4199402 | A1 | 21 June 2023 |
| | | | | US | 2023199766 | A1 | 22 June 2023 |
| WO | 2022029295 | A1 | 10 February 2022 | EP | 4193522 | A1 | 14 June 2023 |
| WO | 2021031754 | A1 | 25 February 2021 | | None | | |

Form PCT/ISA/210 (patent family annex) (July 2022)